# EUROPÄISCHE PATENTSCHRIFT

(11) **EP 2 365 181 B1**
(45) Veröffentlichungstag und Bekanntmachung des Hinweises auf die Patenterteilung: **02.05.2018**
(21) Anmeldenummer: 11001925.4
(22) Anmeldetag: 09.03.2011
(51) Int. Cl.: E06B 5/16, E06B 3/68, B32B 17/06, E04D 3/14, E06B 3/70

(54) **Horizontale Brandschutzverglasung**
Horizontal flame retardant glazing
Vitrage ignifuge horizontal

(30) Priorität: 11.03.2010 DE 202010003492 U
(43) Veröffentlichungstag der Anmeldung: 14.09.2011
(73) Patentinhaber: Holzbau Schmid GmbH & Co. KG, 73099 Adelberg (DE)
(72) Erfinder: Schmid, Claus, 73099 Adelberg (DE)
(74) Vertreter: Ring & Weisbrodt

(56) Entgegenhaltungen:
- DE-A1- 3 919 914
- DE-U1- 29 501 246
- GB-A- 1 215 876

## Beschreibung

Die vorliegende Erfindung betrifft eine Brandschutzverglasung zur Vermeidung des Durchtritts von Feuer und Rauch im Brandfall aus einem Raum in einen anderen oder nach außen, mit einer oder mehreren Brandschutzscheiben und einer die Brandschutzscheiben einfassenden Rahmenkonstruktion mit Holzprofilen.

Eingangs beschriebene Brandschutzverglasungen sind aus dem Stand der Technik bekannt. So wird in der EP 0 724 062 A2 eine Brandschutzverglasung in Form einer vertikalen Brandschutzabtrennung vorgeschlagen, welche zumindest zwei einen intumeszierenden Wirkstoff enthaltende Brandschutzscheiben mit einander zugewandten Stirnflächen aufweist. Zwischen den einzelnen Brandschutzscheiben ist eine diese Scheiben haltende Rahmenkonstruktion aus Holz vorgesehen, welche aus mehreren Holzelementen aufgebaut ist und im Bereich zwischen den Stirnflächen der Brandschutzscheiben eine Schicht aus nicht brennbarem Material aufweist. Die Brandschutzscheiben werden beidseitig durch den Randbereich der Scheiben überragende Holzleisten und durch eine zusätzliche Verklebung mit einer Silikondichtmasse in der Rahmenkonstruktion fixiert. Im Brandfall brennen bei einer solchen Konstruktion zwar die brandseitigen Halteleisten mit der Zeit ab, jedoch wird die Scheibe durch die Verklebung und die brandabseitigen Halteleisten vor dem Herausfallen bewahrt, da die Scheibe aufgrund vertikaler Anordnung nur stabilisiert werden muss und ihr Gewicht unmittelbar nach unten in den Boden abgeleitet wird.

Die GB 1 215 876 A offenbart eine Verglasung mit einer oder mehreren Scheiben und einer die Scheiben einfassenden Rahmenkonstruktion mit Holzprofilen, wobei die Scheiben horizontal angeordnet sind und die Rahmenkonstruktion, das Gewicht der Scheiben aufnehmende Tragprofile aus Holz und mit diesen Tragprofilen verbundene, von den Tragprofilen beabstandete Halteprofile umfasst, die Auflageflächen für die Scheiben bilden.

Derartige Konstruktionen liefern als vertikal aufgebaute Brandschutzelemente einen zuverlässigen und lang haltenden Schutz im Brandfall. Jedoch sind sie nicht geeignet, um als Brandschutzabtrennung bei nicht vertikalem Aufbau verwendet zu werden, beispielsweise in schräger Anordnung bezogen auf die Flächen der Brandschutzscheiben oder gar in horizontaler Anordnung, wie dies beispielsweise im Dachbereich von Gebäuden erwünscht sein kann. In einem solchen Fall wäre die Verklebung alleine nicht in der Lage nach dem Abbrennen der Halteleisten die schwere Brandschutzscheibe im Rahmen zu halten.

In jüngerer Zeit besteht neben den zuvor genannten vertikalen Brandschutzverglasungseinheiten Bedarf, derartige Elemente auch schräg oder horizontal zu verbauen. Die bislang bekannten Holzrahmenkonstruktionen sind aus den oben genannten Gründen hierfür nicht geeignet. Zwar besteht die Möglichkeit, schräg oder horizontal verbaubare Brandschutzverglasungselemente in Stahlrahmenkonstruktionen einzufassen, jedoch sind diese optisch wenig ansprechend und eignen sich aus diesem Grund beispielsweise nicht für die Renovierung bei gleichzeitiger Verbesserung der Brandschutzeigenschaften von älteren Gebäuden, beispielsweise deren Wintergärten.

Die der vorliegenden Erfindung zugrunde liegende Aufgabe bestand somit darin, Brandschutzverglasungen der eingangs genannten Art so auszugestalten, dass diese für den horizontalen und/oder schrägen Einbau von Brandschutzscheiben geeignet sind.

Diese Aufgabe wird dadurch gelöst, dass die Brandschutzscheiben horizontal und/oder schräg angeordnet sind und die Rahmenkonstruktion brandabseitige, das Gewicht der Brandschutzscheiben aufnehmende Tragprofile aus Holz und mit diesen Tragprofilen verbundene, mittels Kühlelementen von den Tragprofilen beabstandete brandseitige Halteprofile aus Metall umfasst, die Auflageflächen für die Brandschutzscheiben bilden.

Der vorliegenden Erfindung liegt die Erkenntnis zugrunde, dass schräge oder horizontale Brandschutzverglasungen, beispielsweise im Dachbereich, unter Verwendung von Tragprofilen aus Holz geschaffen werden können, wenn diese Tragprofile gegenüber der Brandseite, also der Unterseite der Brandschutzverglasung, ausreichend gegen die Flammeneinwirkungen geschützt werden. Dieses Ziel wird durch die Verwendung von Halteprofilen aus Metall erreicht, die an den Tragprofilen angebracht und über Kühlelemente gegenüber den Tragprofilen thermisch isoliert sind.

Die erfindungsgemäße Brandschutzverglasung kann im Gebäudeinnenbereich oder auch als Außenverglasung verwendet werden. Im erstgenannten Fall verhindert sie im Brandfall das Übergreifen der Flammen innerhalb des Gebäudes, im zweiten Fall den Durchtritt der Flammen nach außen, wodurch ein Übergreifen eines Brandes auf Nachbargebäude unterbunden wird.

Was die Dicke der verwendeten Kühlelemente betrifft, so sollte diese ausreichend groß gewählt werden, um die in brandabseitiger Richtung befindlichen Tragprofile aus Holz in ausreichender Weise vor der Hitzeeinwirkung im Brandfall zu schützen. Andererseits sollten die Kühlelemente auch nicht zu dick gewählt werden, um die Bauhöhe der Rahmenkonstruktion möglichst gering zu halten. Die Kühlelemente können einteilig ausgebildet sein oder auch aus mehreren Einzelelementen bestehen, welche beispielsweise parallel und/ oder vertikal zum Verlauf der Tragprofile aufeinander angeordnet sind.

Die Gesamtdicke der Kühlelemente hängt u. a. von der gewünschten Isolationsleistung und vom verwendeten Material ab. So haben Kühlelemente aus Calciumsilikat-Brandschutzplatten typischerweise eine Dicke von 6 mm bis 60 mm.

In Weiterbildung der vorliegenden Erfindung weist die Brandschutzverglasung mehrere Brandschutzscheiben auf, die zumindest zum Teil mit ihren Stoßkanten einander zugewandt sind, wobei zwischen den Stoßkanten zweier benachbarter Brandschutzscheiben ein Zwischenraum ausgebildet ist, in welchen die Tragprofile wenigstens teilweise hineinragen. Eine solche Ausführungsform, bei der die Tragprofile zum Teil in den Zwischenraum zwischen den Brandschutzscheiben verlaufen, weist insgesamt eine geringere Dicke bzw. Bauhöhe auf. Da die Tragprofile aus statischen Gründen je nach Flächengewicht der verwendeten Brandschutzscheiben eine entsprechende Stärke aufweisen müssen, können die Profile somit auf elegante Weise zum Teil zwischen den Brandschutzscheiben verborgen werden, so dass die Brandschutzverglasung insgesamt ein filigraneres Aussehen erhält.

Des Weiteren ist es von Vorteil, wenn die brandseitig an den Tragprofilen vorgesehenen Kühlelemente in dem zwischen den Stoßkanten zweier benachbarter Brandschutzscheiben ausgebildeten Zwischenraum befinden. Hierbei können die Kühlelemente brandseitig aus dem Zwischenraum über die Flächen der Brandschutzscheiben herausstehen, gegenüber diesen zurück gesetzt sein, oder auch bündig mit diesen abschließen.

Im Rahmen der Erfindung kann weiterhin vorgesehen sein, dass die Rahmenkonstruktion umlaufend um jede Brandschutzscheibe ausgebildet ist.

Gemäß einer bevorzugten Ausführungsform der erfindungsgemäßen Brandschutzverglasung sind Befestigungsmittel, insbesondere in Form von Schrauben, vorgesehen, welche zugleich Halteprofile und Kühlelemente durchdringen und zumindest bis in die Tragprofile hineinreichen und so Halteprofile, Kühlelemente und Tragprofile miteinander verbinden. Auf diese Weise kann zwischen den zuvor genannten Bauelementen eine feste Verbindung geschaffen werden, die auch im Brandfall eine ausreichende Stabilität und sichere Fixierung der Brandschutzscheiben sicherstellt.

Es ist weiterhin bevorzugt, Halterprofile aus Stahlblech zu verwenden, insbesondere aus gelochtem Stahlblech. Dieses Material ist als Auflagefläche für die Brandschutzscheiben gut geeignet und vermag diese auch im Brandfall ausreichend zu fixieren und das Gewicht der Brandschutzscheiben auf die Tragprofile aus Holz zu übertragen. Die Verwendung von gelochtem Stahlblech ist bei der Montage hilfreich, da Befestigungsmittel von beiden Seiten ohne vorheriges Bohren durch die Löcher im Blech hindurchgeführt werden können. Beim Aufbau der erfindungsgemäßen Brandschutzverglasung kann so zunächst die Rahmenkonstruktion erstellt, die Brandschutzscheiben anschließend von außen auf die bestehende Rahmenkonstruktion aufgelegt und an dieser fixiert werden. Auf diese Weise können die zu transportierenden Bauteile so klein wie möglich gehalten werden, da sie erst vor Ort montiert werden müssen. Selbstverständlich ist unabhängig von der Vor-Ort-Montage auch eine modulweise Vorfertigung einzelner Elemente in beliebiger Weise möglich.

Gemäß einer weiteren bevorzugten Ausführungsform der erfindungsgemäßen Brandschutzverglasung sind an den Halteprofilen brandseitige Abdeckungen vorgesehen, mit denen die Halteprofile vorzugsweise vollständig abgedeckt sind. Solche Abdeckungen können aus einer oder mehreren Lagen eines Materials bestehen, welches aus Brandschutzplatten, Holz und/oder Metall ausgewählt ist. Als Metalle kommen hierfür beispielsweise Stahl, Edelstahl oder Aluminium in Frage. Als Holzabdeckung können sowohl Laub- als auch Nadelhölzer Verwendung finden. Mit derartigen Abdeckungen können unterschiedliche Ziele verfolgt werden. Die Abdeckung mit einer Brandschutzplatte sorgt im Brandfall dafür, dass die Halteprofile thermisch besser isoliert werden und sich somit weniger erhitzen. Abdeckungen aus Holz oder Metall erfüllen in erster Linie ästhetische Zwecke.

Die zuvor genannten Abdeckungen lassen sich jedoch auch kombiniert verwenden. In besonders bevorzugter Weise bestehen die Abdeckungen in einem solchen Fall zumindest aus zwei Lagen, von denen die eine aus zumindest einer Brandschutzplatte und die weitere Lage aus Holz und/oder Metall besteht, wobei die Brandschutzplatte zwischen dem Halteprofil und der Lage aus Holz und/oder Metall angeordnet ist. Mit einer derartigen Abdeckung werden die vorteilhaften Eigenschaften der unterschiedlichen Materialien miteinander kombiniert. Die unmittelbar am Halteprofil aus Metall angeordnete Brandschutzplatte schützt das Profil im Brandfall vor den Flammen. Da Brandschutzplatten in der Regel optisch wenig ansprechend sind, sorgt die unterseitig auf diesen Brandschutzplatten vorgesehene Holz- bzw. Metallabdeckung für ein ästhetisch ansprechendes Aussehen.

In weiterer Ausgestaltung der erfindungsgemäßen Brandschutzverglasung decken die Kühlelemente die den Halteprofilen zugewandten Seiten der Tragprofile vollständig ab. Dies kann beispielsweise dadurch erreicht werden, dass die Kühlelemente dieselbe Breite aufweisen wie die Tragprofile im Bereich zwischen den Stoßkanten zweier benachbarter Brandschutzscheiben. Hierdurch können die Tragprofile aus Holz wirksam im Brandfall geschützt werden, so dass diese über einen langen Zeitraum ihre die Brandschutzscheiben tragende Funktion in der Rahmenkonstruktion gewährleisten können.

In weiterer Ausgestaltung der Erfindung sind die Kühlelemente durch Brandschutzplatten gebildet. Die im Rahmen der vorliegenden Erfindung eingesetzten Brandschutzplatten einschließlich im Falle des Einsatzes als Kühlelemente können Kalziumsilikat, Gips Vermiculite und/oder Zement beinhalten. Brandschutzplatten aus diesen Materialien weisen gute Isolations- und Kühleigenschaften auf.

Gemäß einer weiteren bevorzugten Ausführungsform der erfindungsgemäßen Brandschutzverglasung sind an den brandabseitigen Flächen der Tragprofile Abdeckleisten angebracht, die sich bis über die Ränder der oberen Flachseiten der Brandschutzscheiben erstrecken und diese abdecken, wobei die Abdeckleisten insbesondere aus Holz und/oder Metall, wie beispielsweise Aluminium, bestehen. Diese Abdeckleisten können auf verschiedene Weise ausgestaltet sein. Für den Fall, dass die Tragprofile aus Holz bündig mit den brandabseitigen Flächen der Brandschutzscheiben abschließen oder nur geringfügig über diese hinaus stehen, können die Abdeckleisten einteilig ausgeführt sein und an den Längskanten über die Tragprofile beidseitig hinaus stehen. Sind konstruktionsbedingt stärkere Tragprofile aus Holz erforderlich, so dass diese weiter aus der aus Brandschutzscheiben gebildeten Fläche hinaus stehen, so können die Abdeckleisten zweiteilig ausgeführt und jeweils seitlich an den Tragprofilen angebracht sein. Die Verwendung einteiliger Abdeckleisten, insbesondere solcher aus Metall, wie beispielsweise aus Edelstahl oder Aluminium haben neben ihrer Eigenschaft, die Brandschutzscheiben auf der Gegenbrandseite zu fixieren, den weiteren Vorteil, die Tragprofile gegenüber Bewitterung zu schützen. Unabhängig von der einteiligen oder zweiteiligen Ausführung der Abdeckleisten können die jeweiligen Übergänge zwischen Brandschutzscheibe, Abdeckleisten und Tragprofilen zusätzlich mit einer Dichtmasse ausgespritzt werden, insbesondere mit einer silikon- oder acrylbasierten Dichtmasse. Solche Massen erfüllen dichtende und klebende Funktionen zugleich.

Weiterhin können bei der erfindungsgemäßen Brandschutzverglasung Streifen aus unter Hitzeeinwirkung aufschäumendem Material vorgesehen sein. Derartige Bänder sind dem Fachmann bekannt. Diese werden vorzugsweise an Grenzflächen zwischen den Brandschutzscheiben und angrenzenden Materialien angebracht, so beispielsweise
a) zwischen den Stoßkanten der Brandschutzscheiben und den Tragprofilen und/oder
b) zwischen den Stoßkanten der Brandschutzscheiben und den Kühlelementen.

Unabhängig von der Verwendung der zuvor genannten Streifen kann an diesen Stellen auch Dichtmasse Verwendung finden, wie beispielsweise auf Silikon- oder Acrylbasis, wobei insbesondere bei brandseitiger Anwendung die Verwendung von Silikonmassen aufgrund der besseren Temperaturbeständigkeit angezeigt ist. Vorzugsweise werden Dichtmasse und Streifen kombiniert verwendet. In diesem Fall werden die Streifen innen liegend zwischen den jeweiligen Bauteilen angebracht und mit Hilfe der Dichtmasse die Fuge randseitig ausgefüllt.

In einer weiteren Ausführungsform der vorliegenden Erfindung können zwischen den Brandschutzscheiben und den Halteprofilen weitere Brandschutzplatten mit insbesondere keilförmigem Zuschnitt vorgesehen sein, die vorzugsweise an ihren den Brandschutzscheiben zugewandten Flächen mit Streifen aus einem unter Hitzeeinwirkung aufschäumenden Material ausgerüstet sind. Mit einer solchen Konstruktion können beispielsweise Übergänge zwischen Bereichen unterschiedlicher Neigung bei einer erfindungsgemäßen Brandschutzverglasung realisiert werden. So kann an einem Bereich mit horizontaler Brandschutzverglasung ein Bereich mit schräg verlaufender Brandschutzverglasung unmittelbar angeschlossen sein. In einem solchen Fall verläuft beispielsweise das Halteprofil der Rahmenkonstruktion in diesem Übergangsbereich horizontal. Die keilförmige Brandschutzplatte wird hierbei auf der Seite der schräg verlaufenden Brandschutzscheibe auf dem Halteprofil angebracht. Der keilförmige Zuschnitt der Brandschutzplatte bietet somit der ersten Brandschutzscheibe im schräg verlaufenden Bereich eine ausreichende Auflagefläche, die deren festen Sitz gewährleistet. Auf diese Weise kann mit geringer Anpassung der Rahmenkonstruktion eine Vielzahl von Gestaltungsformen realisiert werden.

Vorzugsweise werden bei den erfindungsgemäßen Brandschutzverglasungen Brandschutzscheiben mit mehrlagigem Aufbau verwendet, die zumindest eine innen liegende Schicht aus einem intumeszierenden Material aufweisen. Das heißt eine solche Verglasung weist wenigstens zwei außen liegende Glasschichten auf, welche die Schicht aus intumeszierendem Material sandwichartig einschließen. Diese Schicht kann beispielsweise aus einem silikatischen Material, wie beispielsweise einer Wasserglas enthaltenden Mischung bestehen oder aus einem Brandschutzgel gebildet sein. Auch wenn die vorliegende Erfindung nicht auf den Einsatz der zuvor genannten Brandschutzscheibentypen beschränkt ist, bieten diese jedoch einen besseren Schutz als reine Feuerfestverglasungen, da sie im Brandfall eintrüben und auf diese Weise deutlich undurchlässiger für Wärmestrahlung werden.

Bevorzugt kommen mit Brandschutzgel bzw. Hydrogel gefüllte Brandschutzscheiben zur Anwendung. Diese sind aus dem Stand der Technik bekannt und beispielsweise in der EP 1 820 931 A1 und in der DE 10 2005 018 842 A1 beschrieben. Derartige Brandschutzscheiben haben gegenüber Brandschutzscheiben mit festen silikathaltigen intumeszierenden Zwischenschichten, beispielsweise auf Wasserglasbasis den Vorteil, dass sie ein geringeres Flächengewicht bei vergleichbarer Feuerwiderstandsklasse besitzen. Dieser Unterschied spielt bei den erfindungsgemäßen Brandschutzverglasungen eine bedeutende Rolle, da das Gewicht der Brandschutzscheiben vollständig durch die Tragprofile aus Holz aufgenommen wird und nicht, wie bei den bekannten vertikalen Brandschutztrennwänden unmittelbar in den Boden abgeleitet wird.

Ferner sind die mit Brandschutzgel gefüllten Brandschutzscheiben gegenüber den Scheiben mit festen silikathaltigen Intumeszenz-Zwischenschichten weitaus weniger anfällig gegenüber eindringender Feuchtigkeit. Dies führt bei den letztgenannten zur Trübung der Zwischenschicht, was den Austausch der Scheibe erfordert. Da die erfindungsgemäße Brandschutzverglasung u. a. auch im Außenbereich von Gebäuden eingesetzt werden soll und somit Feuchtigkeit und Regen unmittelbar ausgesetzt wird, ist dies auch insofern von Vorteil.

Die vorzugsweise verwendeten Brandschutzscheiben mit einer Brandschutzgelfüllung bestehen üblicherweise aus zumindest zwei parallel beabstandeten Glasscheiben, die über ein in ihrem Rahmenbereich zwischen den Glasscheiben liegendes umlaufendes Abstandshalteprofil wie beispielsweise einen Polyurethan-Randverbund fixiert und miteinander verbunden sind.

In weiterer Ausgestaltung der erfindungsgemäßen Brandschutzverglasung erstrecken sich die Tragprofile entlang der Stoßkanten der Brandschutzscheibe in brandseitiger Richtung nur bis in den Bereich der Schicht aus intumeszierendem Material. Eine solche Ausführungsform ist besonders vorteilhaft, da die intumeszierende Schicht im Brandfall aufschäumt und hierdurch isolierende Wirkungen entfaltet. Die brandseitige Glasscheibe wird trotz der Kühlung durch das Brandschutzgel sehr heiß. Würden die Tragprofile so weit zwischen die Brandschutzscheiben hineinreichen, dass sie in Kontakt mit der brandseitigen Glasscheibe treten, würde sich an dieser Stelle eine Hitzebrücke bilden, die zu einem vorzeitigen Stabilitätsverlust des Tragprofils führen könnte. Um dies zu vermeiden, erstreckt sich das Tragprofil in einer besonders bevorzugten Ausführungsform über einen Bereich von zwei Drittel oder bis etwa zur Hälfte der Schicht aus intumeszierendem Material.

Die im Rahmen der vorliegenden Erfindung einsetzbaren Brandschutzscheiben können auch einen unsymmetrischen Schichtaufbau aufweisen, bei welchem die intumeszierende Schicht an der Innenseite einer der äußeren Glasflächen angeordnet ist. In diesem Fall sollte die Brandschutzscheibe derart in die Brandschutzverglasung eingesetzt sein, dass die mit der intumeszierenden Schicht in Kontakt stehende äußere Glasfläche brandseitig positioniert ist. Auf diese Weise befindet sich die isolierende Intumeszenzschicht möglichst nahe an der Brandseite. Insofern kann bei der Verwendung derartiger Brandschutzscheiben das Tragprofil aus Holz tiefer in den Zwischenraum zweier benachbarter Brandschutzscheiben hineinragen und kann auf diese Weise weitestgehend verborgen werden.

Bei der Verwendung mehrlagiger Brandschutzscheiben können diese auch eine innen liegende gasgefüllte Isolationsschicht und/oder wenigstens eine innen liegende Folienschicht aufweise. Auf diese Weise können die Dämmeigenschaften unter normalen Bedingungen verbessert werden, wobei die Verwendung einer innen liegenden Folienschicht im Fall des Glasbruchs ein Herabstürzen der Bruchstücke verhindert. Die Isolationsschicht bzw. die Folienschicht kann sich unmittelbar an die intumeszierende Schicht anschließen oder von dieser durch eine oder mehrere Glasscheiben und/oder andere Zwischenschichten getrennt sein.

Bei der erfindungsgemäßen Brandschutzverglasung können die Brandschutzscheiben vorzugsweise als Horizontalverglasung oder als Schrägverglasung angeordnet sein.

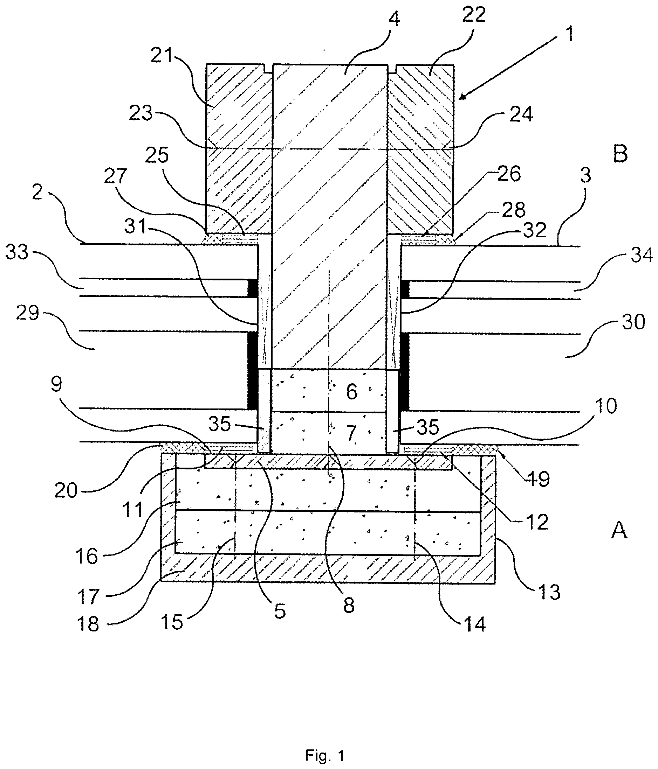

Die vorliegende Erfindung wird im Folgenden beispielhaft anhand der in Figur 1 dargestellten Ausführungsform erörtert.

In der einzigen Figur 1 ist ein Ausschnitt einer erfindungsgemäßen Brandschutzverglasung in Schnittdarstellung abgebildet, mit der ein Durchtritt von Feuer und Rauch im Brandfall aus einem brandseitigen Raum A in einen anderen Raum B oder nach außen vermieden wird. Die Brandschutzverglasung besteht aus einer Rahmenkonstruktion 1, in die mit ihren Stoßkanten 31, 32 einander zugewandte Brandschutzscheiben 2, 3 eingefasst sind und gehalten werden. Die Rahmenkonstruktion 1 weist ein Tragprofil 4 aus Massivholz auf, an das ein Halteprofil 5 über Kühlelemente 6, 7 beabstandet und mittels einer Schraube 8 befestigt ist, die durch die Kühlelemente 6 und 7 hindurchgeführt ist. Das Halteprofil 5 bildet an seinen überstehenden Bereichen Auflageflächen 9, 10, auf denen Streifen 11, 12 aus Vorlegeband (Schaumstoff) vorgesehen sind, auf denen die Brandschutzscheiben 2, 3 aufliegen.

Das Halteprofil 5 ist in brandseitiger Richtung mit einer Abdeckung 13 versehen, die mittels von brandabseitiger Richtung durch das Halteprofil geführte Schrauben 14, 15 gehalten ist. Die Abdeckung 13 besteht aus Lagen 16, 17 aus Brandschutzplatten, welche das Halteprofil 5 brandseitig vollständig abdecken. Die Lagen 16, 17 aus Brandschutzplatten werden in brandseitiger Richtung in den von außen sichtbaren Bereichen durch eine Lage 18 aus Holz vollständig abgedeckt. Die Abdeckung 13 ist an ihren an die Brandschutzscheiben 2, 3 grenzenden Bereichen mittels Silikonfugen 19, 20 abgedichtet.

Auf der Gegenbrandseite B ragt das Tragprofil 4 über die horizontalen Glasflächen der Brandschutzscheiben 2, 3 hinaus. In diesem Bereich sind seitlich an dem Tragprofil 4 Holzleisten 21, 22 mittels Schrauben 23, 24 befestigt, mit denen die Brandschutzscheiben 2, 3 über Streifen 25, 26 aus einem Vorlegeband nach oben hin fixiert sind. Die Leisten 23, 24 sind ferner über Silikonfugen 27, 28 an ihren Außenkanten gegenüber den Brandschutzscheiben 2, 3 abgedichtet.

Die Brandschutzscheiben 2, 3 sind mehrlagig ausgebildet und weisen eine mit einem Brandschutzgel gefüllte Innenlage 29, 30 auf, die unter Normalbedingungen transparent ist. Zur Verbesserung der Wärmeisolation weisen die Brandschutzscheiben 2, 3 eine gasgefüllte Isolationsschicht 33, 34 auf. Die Brandschutzscheiben 2, 3 sind voneinander beabstandet und bilden zwischen ihren Stoßkanten 31, 32 einen Zwischenraum aus, in den das Tragprofil 4 bis auf die Höhe der Mitte der Brandschutzgelschichten 29, 30 hineinragt.

Im Brandfall schäumen die Brandschutzgelschichten 29, 30 auf, werden trübe und isolieren auf diese Weise die Gegenbrandseite B von der Brandseite A. Dadurch, dass das Tragprofil 4 nur etwa bis zur Hälfte der Brandschutzgelschicht 29, 30 in den Zwischenraum zwischen die Brandschutzscheiben 2, 3 hineinragt, wird das Tragprofil 4 in seitlicher Richtung durch die aufgeschäumten Brandschutzgelschichten 29, 30 gegen unmittelbare Hitzeeinwirkung geschützt. In unmittelbarer Richtung zur Brandseite wird das Tragprofil 4 durch die Kühlelemente 6, 7 vor dem Abbrand bewahrt. Zusätzlich sind zwischen den Stoßkanten 31, 32 der einander zugewandten Brandschutzscheiben 2, 3 und der Rahmenkonstruktion 1, insbesondere dem benachbarten Tragprofil 4 und/oder den Kühlelementen 6, 7, mit Vorteil Streifen 35 aus unter Hitzeeinwirkung aufschäumendem Material (Intumeszenzmaterial) angeordnet. Selbst nach Abbrand der Holzabdeckung 18 wird das Halteprofil 5 durch die Brandschutzplatten 16, 17 vor der unmittelbaren Flammeneinwirkung geschützt. Auf diese Weise wird gleichzeitig die Schraube 8 gekühlt, mit der das Halteprofil 5 am Tragprofil 4 gefestigt ist, so dass durch die Schraube 8 keine Wärmebrücke zum Tragprofil 4 gebildet wird. Die ebenfalls im Brandfall aufschäumenden Streifen 11, 12 sorgen selbst nach Abbrand der Silikonfugen 19, 20 für eine rauchdichte Verbindung zwischen den Auflageflächen 9, 10 und den jeweiligen Brandschutzscheiben 2, 3. Auf diese Weise kann gewährleistet werden, dass, obwohl das Gewicht der Brandschutzscheiben 2, 3 durch das Tragprofil 4 aus Holz gehalten wird, die Konstruktion auch bei längerer Branddauer ihre Brandschutzeigenschaften erfüllen kann.

### Bezugszeichenliste

- A: Brandseitiger Raum, Brandseite
- B: Brandabseitiger Raum, Brandgegenseite
- 1: Rahmenkonstruktion
- 2: Brandschutzscheibe
- 3: Brandschutzscheibe
- 4: Tragprofil
- 5: Halteprofil
- 6: Kühlelement
- 7: Kühlelement
- 8: Schraube
- 9: Auflagefläche
- 10: Auflagefläche
- 11: Vorlegeband (Schaumstoff)
- 12: Vorlegeband (Schaumstoff)
- 13: Abdeckung
- 14: Schraube
- 15: Schraube
- 16: Lage aus Brandschutzplatte
- 17: Lage aus Brandschutzplatte
- 18: Lage aus Holz
- 19: Siliconfuge
- 20: Siliconfuge
- 21: Abdeckleiste
- 22: Abdeckleiste
- 23: Schraube
- 24: Schraube
- 25: Streifen
- 26: Streifen
- 27: Siliconfuge
- 28: Siliconfuge
- 29: Brandschutzgelschicht
- 30: Brandschutzgelschicht
- 31: Stoßkante
- 32: Stoßkante
- 33: gasgefüllte Isolationsschicht
- 34: gasgefüllte Isolationsschicht
- 35: aufschäumender Baustoff

## Patentansprüche

1. Brandschutzverglasung zur Vermeidung des Durchtritts von Feuer und Rauch im Brandfall nach außen, wodurch ein Übergreifen eines Brandes auf Nachbargebäude unterbunden wird, mit einer oder mehreren Brandschutzscheiben (2, 3) und einer die Brandschutzscheiben (2, 3) einfassenden Rahmenkonstruktion (1) mit Holzprofilen,
**dadurch gekennzeichnet, dass**
die Brandschutzscheiben (2, 3) horizontal und/oder schräg angeordnet sind und die Rahmenkonstruktion (1) außen brandabseitige und demnach an der Oberseite der Brandschutzverglasung angeordnete, das Gewicht der Brandschutzscheiben (2, 3) aufnehmende Tragprofile (4) aus Holz und mit diesen Tragprofilen (4) verbundene, mittels Kühlelementen (6, 7) von den Tragprofilen (4) beabstandete innen brandseitige und demnach an der Unterseite der Brandschutzverglasung angeordnete Halteprofile (5) aus Metall umfasst, die Auflageflächen (9, 10) für die Brandschutzscheiben (2, 3) bilden.

2. Brandschutzverglasung nach Anspruch 1,
**dadurch gekennzeichnet,**
**dass** die Brandschutzverglasung mehrere Brandschutzscheiben (2, 3) aufweist, die zumindest zum Teil mit ihren Stoßkanten einander zugewandt sind, wobei zwischen den Stoßkanten (31, 32) zweier benachbarter Brandschutzscheiben (2 ,3) ein Zwischenraum ausgebildet ist, in welchen die Tragprofile (4) wenigstens teilweise hineinragen.

3. Brandschutzverglasung nach Anspruch 1 oder 2,
**dadurch gekennzeichnet,**
**dass** die Rahmenkonstruktion (1) umlaufend um jede Brandschutzscheibe (2 ,3) ausgebildet ist.

4. Brandschutzverglasung nach einem der vorstehenden Ansprüche,
**dadurch gekennzeichnet,**
**dass** Befestigungsmittel (8), insbesondere in Form von Schrauben, vorgesehen sind, welche zugleich Halteprofile (5) und Kühlelemente (6, 7) durchdringen und zumindest bis in die Tragprofile (4) hineinreichen und so Halteprofile (5), Kühlelemente (6, 7) und Tragprofile (4) miteinander verbinden.

5. Brandschutzverglasung nach einem der vorstehenden Ansprüche,
**dadurch gekennzeichnet,**
**dass** die Halteprofile (5) aus Stahlblech bestehen, insbesondere aus gelochtem Stahlblech.

6. Brandschutzverglasung nach einem der vorstehenden Ansprüche,
**dadurch gekennzeichnet,**
**dass** an den Halteprofilen (5) brandseitige Abdeckungen (13) vorgesehen sind, mit denen die Halteprofile (5) vorzugsweise vollständig abgedeckt sind.

7. Brandschutzverglasung Anspruch 6,
**dadurch gekennzeichnet,**
**dass** die Abdeckungen (13) der Halteprofile (5) aus einer oder mehreren Lagen eines Materials bestehen, das ausgewählt ist aus Brandschutzplatten, Holz und/oder Metall.

8. Brandschutzverglasung nach einem der Ansprüche 6 oder 7,
**dadurch gekennzeichnet,**
**dass** die Abdeckungen (13) zumindest zwei Lagen aufweisen, von denen die eine aus zumindest einer Brandschutzplatte (16, 17) und die weitere Lage (18) aus Holz und/oder Metall besteht, wobei die Brandschutzplatte (16, 17) zwischen dem Halteprofil (5) und der Lage (18) aus Holz und/oder Metall angeordnet ist.

9. Brandschutzverglasung nach einem der vorstehenden Ansprüche,
**dadurch gekennzeichnet,**
**dass** die Kühlelemente (6, 7) die den Halteprofilen (5) zugewandten Seiten der Tragprofile (4) vollständig abdecken.

10. Brandschutzverglasung nach einem der vorstehenden Ansprüche,
**dadurch gekennzeichnet,**
**dass** die Kühlelemente (6, 7) durch Brandschutzplatten gebildet sind.

11. Brandschutzverglasung nach einem der vorstehenden Ansprüche,
**dadurch gekennzeichnet,**
**dass** die Brandschutzplatten Calciumsilikat, Gips, Vermiculite und/ oder Zement beinhalten.

12. Brandschutzverglasung nach einem der vorstehenden Ansprüche,
**dadurch gekennzeichnet,**
**dass** an den brandabseitigen Flächen der Tragprofile (4) Abdeckleisten (21, 22) angebracht sind, die sich bis über die Ränder der oberen Flachseiten der Brandschutzscheiben (2, 3) erstrecken und diese abdecken, wobei die Abdeckleisten (21, 22) insbesondere aus Holz und/oder Metall, wie beispielsweise Aluminium oder Edelstahl, bestehen.

13. Brandschutzverglasung nach einem der vorstehenden Ansprüche,
**dadurch gekennzeichnet,**
**dass**
a) zwischen den Stoßkanten (31, 32) der Brandschutzscheiben (2, 3) und den Tragprofilen (4) und/oder
b) zwischen den Stoßkanten (31, 32) der Brandschutzscheiben (2, 3) und den Kühlelementen (6, 7)
Streifen (11, 12, 25, 26) aus einem Vorlegeband oder unter Hitzeeinwirkung aufschäumenden Material vorgesehen sind.

14. Brandschutzverglasung nach einem der vorstehenden Ansprüche,
**dadurch gekennzeichnet,**
**dass** zwischen den Brandschutzscheiben (2, 3) und den Halteprofilen (5) weitere Brandschutzplatten mit insbesondere keilförmigem Zuschnitt vorgesehen sind, die vorzugsweise an ihren den Brandschutzscheiben (2 ,3) zugewandten Flächen mit Streifen aus einem unter Hitzeeinwirkung aufschäumenden Material ausgerüstet sind.

15. Brandschutzverglasung nach einem der vorstehenden Ansprüche,
**dadurch gekennzeichnet,**
**dass** die Brandschutzscheiben (2, 3) mehrlagig aufgebaut sind und zumindest eine innen liegende Schicht (29, 30) aus einem intumeszierenden Material aufweisen.

16. Brandschutzverglasung nach Anspruch 15,
**dadurch gekennzeichnet,**
**dass** die intumeszierende Schicht (29, 30) aus einem silikatischen Material oder einem Brandschutzgel besteht.

17. Brandschutzverglasung nach einem der Ansprüche 15 oder 16,
**dadurch gekennzeichnet,**
**dass** sich die Tragprofile (4) entlang der Stoßkanten (31, 32) der Brandschutzscheiben (2, 3) in brandseitiger Richtung (A) nur bis in den Bereich der Schicht (29, 30) aus intumeszierendem Material erstrecken.

18. Brandschutzverglasung nach einem der Ansprüche 15 bis 17,
**dadurch gekennzeichnet,**
**dass** die Brandschutzscheiben (2, 3) einen unsymmetrischen Schichtaufbau aufweisen, bei dem die Schicht (29, 30) aus intumeszierendem Material an der Innenseite einer der äußeren Glasflächen angeordnet ist und diese Brandschutzscheiben (2, 3) derart in die Brandschutzverglasung eingesetzt sind, dass die mit der Schicht (29, 30) aus intumeszierendem Material in Kontakt stehende äußere Glasfläche brandseitig (A) positioniert ist.

19. Brandschutzverglasung nach einem der vorstehenden Ansprüche,
**dadurch gekennzeichnet,**
**dass** die Brandschutzscheiben (2, 3) mehrlagig aufgebaut sind und wenigstens eine innen liegende gasgefüllte Isolationsschicht (33, 34) und/ oder wenigstens eine innen liegende Folienschicht aufweisen.

20. Brandschutzverglasung nach einem der vorstehenden Ansprüche,
**dadurch gekennzeichnet,**
**dass** die Brandschutzscheiben (2, 3) als Horizontalverglasung oder als Schrägverglasung angeordnet sind.

## Claims

1. A fire protection glazing for preventing fire and smoke from getting outside in case of fire, whereby the extension of the fire to adjacent buildings will be prevented, comprising one or more fire protection panes (2, 3) and a frame construction (1) which surrounds the fire protections panes (2, 3) and comprises wooden profiles,
**characterized in that**
the fire protection panes (2, 3) are arranged horizontally and/or in an inclined position and the frame construction (1) comprises supporting profiles (4) made of wood that are arranged outside on the side facing away from the fire and thus on the upper side of the fire protection glazing and that receive the weight of the fire protection panes (2, 3) and holding profiles (5) made of metal that are connected with the said supporting profiles (4), are spaced apart from the supporting profiles (4) by means of cooling elements (6, 7) and are arranged inside on the side facing the fire and thus on the bottom side of the fire protection glazing, and that form supporting surfaces (9, 10) for the fire protection panes (2, 3).

2. A fire protection glazing according to claim 1,
**characterized in that**
the fire protection glazing comprises several fire protection panes (2, 3) which are at least partially facing each other with the edges thereof, wherein an interspace is formed between two adjacent fire protection panes (2, 3), into which the supporting profiles (4) at least partially project.

3. A fire protection glazing according to claim 1 or 2,
**characterized in that**
the frame construction (1) is extending circumferentially around each fire protection pane (2, 3).

4. A fire protection glazing according to one of the preceding claims,
**characterized in that**
fastening means (8), in particular in the form of screws, are provided which simultaneously penetrate through the holding profiles (5) and the cooling elements (6, 7) and at least project into the supporting profiles (4) and thus connect the holding profiles (5), the cooling elements (6, 7) and the supporting profiles (4) with each other.

5. A fire protection glazing according to one of the preceding claims,
**characterized in that**
the holding profiles (5) are made of steel sheet, in particular of perforated steel sheet.

6. A fire protection glazing according to one of the preceding claims,
**characterized in that**
covers (13) on the side of the fire are provided on the holding profiles (5), by means of which covers the holding profiles (5) are preferably completely covered.

7. A fire protection glazing according to claim 6,
**characterized in that**
the covers (13) of the holding profiles (5) are made of one or more layers of a material that is selected from fire protection plates, wood and/or metal.

8. A fire protection glazing according to one of the claims 6 or 7,
**characterized in that**
the covers (13) at least comprise two layers, the one of which is made of at least one fire protection plate (16, 17) and the other layer (18) is made of wood and/or metal, wherein the fire protection plate (16, 17) is arranged between the holding profile (5) and the layer (18) made of wood and/or metal.

9. A fire protection glazing according to one of the preceding claims,
**characterized in that**
the cooling elements (6, 7) completely cover the sides of the supporting profiles (4), which sides face the holding profiles (5).

10. A fire protection glazing according to one of the preceding claims,
**characterized in that**
the cooling elements (6, 7) are formed by fire protection plates.

11. A fire protection glazing according to one of the preceding claims,
**characterized in that**
the fire protection plates comprise calcium silicate, gypsum, vermiculite and/or cement.

12. A fire protection glazing according to one of the preceding claims,
**characterized in that**
cover strips (21, 22) are arranged on the surfaces of the supporting profiles (4), which surfaces face away from the fire, which cover strips extend up to over the borders of the upper flat sides of the fire protection panes (2, 3) and cover these ones, wherein the cover strips (21, 22) are in particular made of wood and/or metal, such as for example aluminium or stainless steel.

13. A fire protection glazing according to one of the preceding claims,
**characterized in that**
strips (11, 12, 25, 26) made of a glazing tape or material that foams under heat influence are provided
a) between the edges (31, 32) of the fire protection panes (2, 3) and the supporting profiles (4) and/or
b) between the edges (31, 32) of the fire protection panes (2, 3) and the cooling elements (6, 7).

14. A fire protection glazing according to one of the preceding claims,
**characterized in that**
other fire protection plates which are especially cut in a wedge-shaped manner are provided between the fire protection plates (2, 3) and the holding profiles (5), which other fire protection plates preferably have their surfaces facing the fire protection panes (2, 3) equipped with strips made of a material that foams under heat influence.

15. A fire protection glazing according to one of the preceding claims,
**characterized in that**
the fire protection panes (2, 3) have a multilayer structure and at least comprise an inner layer (29, 30) made of an intumescent material.

16. A fire protection glazing according to claim 15,
**characterized in that**
the intumescent layer (29, 30) is made of a siliceous material or a fire protection gel.

17. A fire protection glazing according to one of the claims 15 or 16,
**characterized in that**
the supporting profiles (4) extend along the edges (31, 32) of the fire protection panes (2, 3) into the fire-side direction (A) only until reaching the area of the layer (29, 30) made of intumescent material.

18. A fire protection glazing according to one of the claims 15 to 17,
**characterized in that**
the fire protection panes (2, 3) comprise an asymmetrical layer structure, in which the layer (29, 30) made of intumescent material is arranged on the inside of one of the outer glass surfaces and these fire protection panes (2, 3) are inserted into the fire protection glazing, such that the outer glass surface which is in contact with the layer (29, 30) made of intumescent material is positioned on the side of the fire (A).

19. A fire protection glazing according to one of the preceding claims,
**characterized in that**
the fire protection panes (2, 3) have a multilayer structure and comprise at least one inner gas-filled insulation layer (33, 34) and/or at least one inner foil layer.

20. A fire protection glazing according to one of the preceding claims,
**characterized in that**
the fire protection panes (2, 3) are arranged as a horizontal glazing or as a sloped glazing.

## Revendications

1. Vitrage pare-feu pour empêcher le feu et la fumée de passer à l'extérieur en cas d'incendie, ce qui évite une propagation du feu à des bâtiments voisins, comprenant
une ou plusieurs vitres pare-feu (2, 3) et une construction de cadre (1) entourant les vitres pare-feu (2, 3) et comprenant des profilés en bois, **caractérisé en ce que**
les vitres pare-feu (2, 3) sont disposées horizontalement et/ou avec une inclinaison et la construction de cadre (1) comprend des profilés de support (4) en bois, qui sont disposés à l'extérieur sur le côté orienté en sens inverse du feu et ainsi sur la face supérieure du vitrage pare-feu, et qui reçoivent le poids des vitres pare-feu (2, 3) et des profilés de retenue (5) en métal, qui sont reliés auxdits profilés de support (4), espacés des profilés de support (4) par moyen d'éléments de refroidissement (6, 7) et disposés à l'intérieur sur le côté orienté vers le feu et ainsi sur la face inférieure du vitrage pare-feu, lesquels profilés de retenue forment des surfaces d'appui (9, 10) pour les vitres pare-feu (2, 3).

2. Vitrage pare-feu selon la revendication 1,
**caractérisé en ce que**
le vitrage pare-feu comprend plusieurs vitres pare-feu (2, 3), qui font au moins partiellement face l'une à l'autre avec leurs bords d'aboutement, un interstice étant formé entre les bords d'aboutement (31, 32) de deux vitres pare-feu (2, 3) adjacentes, dans lequel font au moins partiellement saillie les profilés de support (4).

3. Vitrage pare-feu selon la revendication 1 ou la revendication 2,
**caractérisé en ce que**
la construction de cadre (1) est configurée de manière circonférentielle autour de chaque vitre pare-feu (2, 3).

4. Vitrage pare-feu selon l'une quelconque des revendications précédentes,
**caractérisé en ce que**
des moyens de fixation (8), notamment sous forme de vis, sont prévus, qui pénètrent simultanément des profilés de retenue (5) et des éléments de refroidissement (6, 7) et qui font au moins saillie dans les profilés de support (4) et relient ainsi les profilés de retenue (5), les éléments de refroidissement (6, 7) et les profilés de support (4) les uns aux autres.

5. Vitrage pare-feu selon l'une quelconque des revendications précédentes,
**caractérisé en ce que**
les profilés de retenue (5) sont fabriqués en tôle acier, notamment en tôle acier perforée.

6. Vitrage pare-feu selon l'une quelconque des revendications précédentes,
**caractérisé en ce que**
des couvertures (13) sont prévues sur les profilés de retenue (5) sur le côté du feu, par moyen desquelles les profilés de retenue (5) sont de préférence complètement couverts.

7. Vitrage pare-feu selon la revendication 6,
**caractérisé en ce que**
les couvertures (13) des profilés de retenue (5) sont fabriquées en une ou plusieurs couches en un matériau, qui est sélectionné parmi des panneaux coupe-feu, le bois et/ou le métal.

8. Vitrage pare-feu selon l'une des revendications 6 ou 7,
**caractérisé en ce que**
les couvertures (13) comprennent au moins deux couches, dont l'une est composée d'au moins un panneau coupe-feu (16, 17) et l'autre couche (18) est fabriquée en bois et/ou en métal, le panneau coupe-feu (16, 17) étant disposé entre le profilé de retenue (5) et la couche (18) en bois et/ou en métal.

9. Vitrage pare-feu selon l'une quelconque des revendications précédentes,
**caractérisé en ce que**
les éléments de refroidissement (6, 7) couvrent complètement les faces des profilés de support (4), lesquelles sont dirigées vers le profilés de retenue (5).

10. Vitrage pare-feu selon l'une quelconque des revendications précédentes,
**caractérisé en ce que**
les éléments de refroidissement (6, 7) sont formés par des panneaux coupe-feu.

11. Vitrage pare-feu selon l'une quelconque des revendications précédentes,
**caractérisé en ce que**
les panneaux coupe-feu contiennent du silicate de calcium, du plâtre, du vermiculite et/ou du cément.

12. Vitrage pare-feu selon l'une quelconque des revendications précédentes,
**caractérisé en ce que**
des baguettes de recouvrement (21, 22) sont montées sur les surfaces sur le côté orienté en sens inverse du feu des profilés de support (4), lesquelles baguettes de recouvrement s'étendent jusqu'à dessus des bords des faces planes supérieures des vitres pare-feu (2, 3) et couvrent ceux-ci, les baguettes de recouvrement (21, 22) étant notamment fabriquées en bois et/ou en métal, tel que l'aluminium ou l'acier inoxydable.

13. Vitrage pare-feu selon l'une quelconque des revendications précédentes,
**caractérisé en ce que**
des bandes (11, 12, 25, 26) d'un ruban adhésif ou des bandes en un matériau moussant sous l'effet de la chaleur sont prévues
a) entre les bords d'aboutement (31, 32) des vitres pare-feu (2, 3) et les profilés de support (4) et/ou
b) entre les bords d'aboutement (31, 32) des vitres pare-feu (2, 3) et les éléments de refroidissement (6, 7).

14. Vitrage pare-feu selon l'une quelconque des revendications précédentes,
**caractérisé en ce que**
d'autres panneaux coupe-feu notamment coupés en forme de coin sont prévus entre les panneaux coupe-feu (2, 3) et les profilés de retenue (5), les autres panneaux coupe-feu étant de préférence munis de bandes en un matériau moussant sous l'effet de la chaleur sur leurs surfaces orientées vers les vitres pare-feu (2, 3).

15. Vitrage pare-feu selon l'une quelconque des revendications précédentes,
**caractérisé en ce que**
les panneaux coupe-feu (2, 3) ont une structure multicouches et comprennent au moins une couche intérieure (29, 30) en un matériau intumescent.

16. Vitrage pare-feu selon la revendication 15,
**caractérisé en ce que**
la couche intumescente (29, 30) est composée d'un matériau siliceux ou d'un gel coupe-feu.

17. Vitrage pare-feu selon l'une des revendications 15 ou 16,
**caractérisé en ce que**
les profilés de support (4) ne s'étendent le long des bords d'aboutement (31, 32) des vitres pare-feu (2, 3) dans la direction du feu (A) que dans la zone de la couche (29, 30) en un matériau intumescent.

18. Vitrage pare-feu selon l'une des revendications 15 à 17,
**caractérisé en ce que**
les vitres pare-feu (2, 3) comprennent une structure de couches asymétrique, dans laquelle la couche (29, 30) en un matériau intumescent est disposée sur la face intérieure d'une des surfaces en verre extérieures et ces vitres pare-feu (2, 3) sont insérées dans le vitrage pare-feu de sorte que la surface en verre extérieure, qui est en contact avec la couche en un matériau intumescent (29, 30), est positionnée sur le côté du feu (A).

19. Vitrage pare-feu selon l'une des revendications précédentes,
**caractérisé en ce que**
les vitres pare-feu (2, 3) ont une structure multicouches et comprennent au moins une couche d'isolation intérieure remplie de gaz (33, 34) et/ou au moins une couche de film intérieure.

20. Vitrage pare-feu selon l'une des revendications précédentes,
**caractérisé en ce que**
les vitres pare-feu (2, 3) sont disposées en tant que vitrage horizontal ou en tant que vitrage incliné.
